(19) Europäisches Patentamt
European Patent Office
Office européen des brevets

(11) **EP 2 336 931 B1**

(12) **FASCICULE DE BREVET EUROPEEN**

(45) Date de publication et mention
de la délivrance du brevet:
**09.01.2013 Bulletin 2013/02**

(51) Int Cl.:
***G06F 21/00*** *(2013.01)*

(21) Numéro de dépôt: **10189785.8**

(22) Date de dépôt: **03.11.2010**

(54) **Procédé de vérification de signature**

Verfahren zur Unterschriftenprüfung

Method for signature verification

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.11.2009 FR 0958142**

(43) Date de publication de la demande:
**22.06.2011 Bulletin 2011/25**

(73) Titulaire: **STMicroelectronics (Rousset) SAS
13790 Rousset (FR)**

(72) Inventeurs:
• **Teglia, Yannick
13720, Belcodene (FR)**

• **Orlando, William
13790, Peynier (FR)**

(74) Mandataire: **de Beaumont, Michel
1bis, rue Champollion
38000 Grenoble (FR)**

(56) Documents cités:
**FR-A1- 2 841 015**

• **HAGAI BAR-EL ET AL: "The Sorcerer's
Apprentice Guide to Fault Attacks", INTERNET
CITATION, 16 octobre 2004 (2004-10-16),
XP002329915, Extrait de l'Internet: URL:http:
//web.archive.org/web/20041016071
838/eprint.iacr.org/2004/100 [extrait le
2005-05-27]**

EP 2 336 931 B1

**Description**

<u>Domaine</u>

La présente invention concerne un procédé et un circuit de vérification de signature, et en particulier un procédé et un circuit de vérification d'une signature pour détecter une ou plusieurs fautes.

<u>État de l'art antérieur</u>

Les circuits intégrés peuvent comprendre des circuits qui sont considérés comme sensibles du point de vue de la sécurité des données qu'ils manipulent, comme des clés d'authentification, des signatures, etc., ou du point de vue des algorithmes qu'ils utilisent, comme des algorithmes de chiffrement ou de déchiffrement. On souhaite que de telles informations restent secrètes ce qui signifie qu'elles ne doivent pas être communiquées ou être détectables par des tiers ou par des circuits non autorisés.

Un procédé courant de piratage d'informations manipulées par un circuit intégré consiste à détecter les zones du circuit qui sont utilisées pendant le traitement de ces informations. Pour cela, le circuit est activé ou placé dans un environnement fonctionnel et des paquets de données à coder sont introduits en entrée. Pendant le traitement des données, la surface du circuit intégré est balayée par un laser pour injecter des fautes dans le fonctionnement du circuit. En analysant en parallèle les sorties du circuit, on peut déterminer les zones du circuit qui traitent les données. Après avoir localisé ces zones, le pirate peut concentrer des attaques sur ces zones afin de déterminer les données secrètes qui sont traitées.

Les signatures assurent un moyen de protection d'un circuit contre des attaques par injection de fautes. Une signature est générée sur la base d'une ou plusieurs valeurs de données qui vont être utilisées par un algorithme. Une signature est ensuite générée sur la base des mêmes valeurs de données après leur utilisation par l'algorithme. Une différence entre les deux signatures va indiquer la présence d'une attaque. Une fois que le circuit de détection a détecté une telle attaque, il peut déclencher une contre-mesure, comme par exemple la remise à zéro du circuit et/ou l'incrémentation d'un compteur, ce qui rend le circuit intégré inactif en permanence une fois qu'un certain nombre de fautes ont été détectées.

Afin d'être efficace pour la détection d'attaques par injection de fautes, il est préférable de calculer à l'avance une signature concernant un bloc de données donné, puis de la recalculer sur la base du bloc de données après l'utilisation de ces données par exemple dans un ou plusieurs algorithmes. Cependant, les données qui sont utilisées au cours de l'algorithme sont souvent altérées, par exemple par un brouillage ou d'autres opérations effectuées sur les données. Cela conduit à un problème, en ce que de telles altérations dans les données peuvent conduire à une discordance entre les signatures même lorsqu'aucune attaque par injection de fautes n'a eu lieu.

Il serait souhaitable de prévoir des circuits dans lesquels on peut détecter des attaques par injection de fautes, même après la transformation des données d'origine par un ou plusieurs algorithmes.

La demande de brevet FR 2 841 015 concerne un procédé et circuit de contrôle de l'exécution d'un programme mettant en oeuvre des instructions successives, comprenant l'étape de calculer pour chaque opérateur de l'instruction, une signature numérique.

<u>Résumé</u>

Un objet de modes de réalisation de la présente invention est de résoudre au moins partiellement un ou plusieurs problèmes de l'art antérieur.

Selon un aspect de la présente invention, on prévoit un procédé de détection de faute, comprenant : générer au moins une valeur de données brouillée sur la base d'au moins une valeur d'entrée et d'au moins un paramètre de brouillage choisi parmi une pluralité de paramètres de brouillage ; générer une première signature sur la base de ladite au moins une valeur de données brouillée ; sélectionner, dans une mémoire mémorisant une pluralité de signatures de référence, chacune de la pluralité de signatures de référence tour à tour ; et comparer la première signature à chacune de la pluralité de signatures de référence, une faute étant détectée si aucune des signatures de référence ne concorde avec la première signature.

Selon un mode de réalisation, le procédé comprend en outre, avant l'étape de sélection d'une ou plusieurs signatures de référence dans la mémoire, la génération de la pluralité de signatures de référence sur la base de la pluralité de paramètres de brouillage, et la mémorisation des valeurs dans la mémoire.

Selon un autre mode de réalisation, l'étape de sélection d'une ou plusieurs signatures de référence dans la mémoire comprend la sélection d'une signature de référence sur la base dudit au moins un paramètre sélectionné.

Selon un autre mode de réalisation, la première signature et la pluralité de signatures de référence sont des valeurs indiquant une différence par rapport à une valeur de signature de base générée sur la base de ladite au moins une valeur de données d'entrée.

Selon un autre mode de réalisation, les paramètres de brouillage sont des clés de chiffrement et ladite au moins une valeur de données brouillée est une valeur de donnée cryptée ou décryptée générée sur la base de la valeur de paramètre sélectionnée.

Selon un autre mode de réalisation, il y a une pluralité de valeurs de données brouillées, et la première signature est générée en appliquant l'une des fonctions suivantes entre chacune des valeurs de données brouillées: une fonction de hachage ; une fonction Ou-Exclusif (XOR) ; une multiplication ; et une addition.

Selon un autre aspect de la présente invention, on prévoit un procédé de détection d'une attaque par injection de fautes comprenant le procédé susmentionné de détection de faute, dans lequel une attaque par injection de faute est détectée si une différence est détectée entre la première signature et chacune desdites une ou plusieurs signatures de référence.

Selon un autre aspect de la présente invention, on prévoit un procédé de vérification de l'authenticité de données cryptées ou décryptées comprenant le procédé susmentionné de détection de fautes, dans lequel la pluralité de paramètres est constituée de clés de chiffrement, et dans lequel les données cryptées sont déterminées comme n'étant pas authentiques si une différence est détectée entre la première signature et chacune desdites une ou plusieurs signatures de référence.

Selon un autre aspect de la présente invention, on prévoit un circuit de détection de faute comprenant : un module fonctionnel agencé pour générer au moins une valeur de données brouillée sur la base d'au moins une valeur d'entrée et d'au moins un paramètre de brouillage choisi parmi une pluralité de paramètres de brouillage ; un bloc de signature agencé pour générer une première signature sur la base de ladite au moins une valeur de données brouillée ; une mémoire mémorisant une pluralité de signatures de référence ; des moyens de sélection de chacune de la pluralité de signatures de référence tour à tour ; et un comparateur agencé pour comparer la première signature à chacune de la pluralité de signatures de référence, une faute étant détectée si aucune des signatures de référence ne concorde avec la première signature.

Selon d'autres aspects de la présente invention, on prévoit un circuit intégré comprenant le circuit susmentionné, et un dispositif électronique, une carte à puce et un lecteur de cartes à puce comprenant le circuit intégré.

Brève description des dessins

Les objets, caractéristiques, aspects et avantages, susmentionnés de l'invention, et d'autres encore, apparaîtront clairement à la lecture de la description détaillée de modes de réalisation, donnée à titre d'illustration et non de limitation, en référence aux dessins joints, dans lesquels :

la figure 1 illustre un circuit de détection d'attaques par injection de fautes selon un mode de réalisation ;
les figures 2 à 4 illustrent des circuits de détection de faute selon des modes de réalisation de la présente invention ; et
la figure 5 illustre un dispositif électronique selon des modes de réalisation de la présente invention.

Description détaillée

Dans un but de clarté, seules les étapes et éléments utiles à la compréhension de l'invention ont été représentés dans les figures et vont être décrits en détail. En particulier, le circuit destiné à remettre à zéro un circuit intégré ou à le rendre inactif à la détection d'une ou plusieurs injections de fautes n'a pas été détaillé, l'invention pouvant s'appliquer à tout circuit de la sorte. En outre, les fonctions principales du circuit intégré qui sont protégées n'ont pas été décrites en détail, l'invention étant compatible avec des circuits intégrés mettant en oeuvre toutes sortes de fonctions sensibles, comme des fonctions de chiffrement ou de déchiffrement, ou d'autres fonctions impliquant des données sensibles.

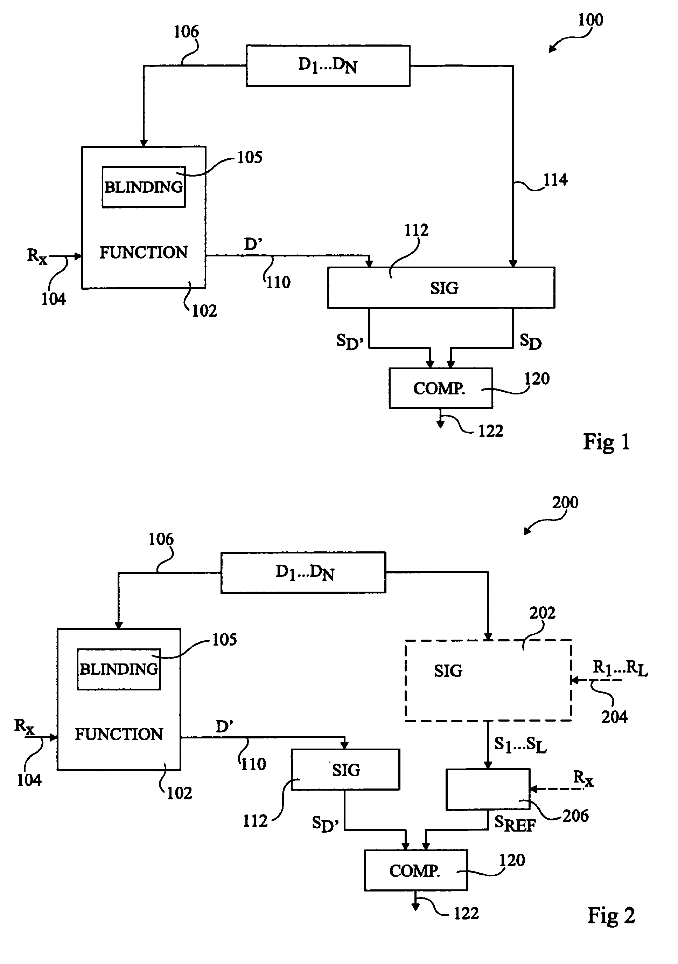

La figure 1 illustre un circuit 100 comprenant un module fonctionnel (FUNCTION) 102 qui, par exemple, met en oeuvre un algorithme impliquant des données sensibles, comme une clé de chiffrement ou similaire. Le module 102 comprend une ligne d'entrée 104 destinée à recevoir un paramètre de brouillage $R_x$ utilisé pour mettre en oeuvre l'algorithme. Le paramètre de brouillage $R_x$ est par exemple une valeur pseudo-aléatoire, une clé de chiffrement ou une autre valeur de données, qui pourrait être une valeur secrète, ou disponible publiquement. Par exemple, le module fonctionnel 102 comprend un bloc de brouillage (BLINDING) 105, qui applique un algorithme de brouillage aux valeurs de données $D_1$ à $D_N$ pour assurer une certaine protection contre des attaques par canaux cachés. Dans ce cas, le paramètre de brouillage $R_x$ est par exemple une valeur de brouillage pseudo-aléatoire, sur la base de laquelle la fonction de brouillage est appliquée.

Le module fonctionnel 102 reçoit aussi des valeurs de données $D_1$ à $D_N$ sur une ligne d'entrée 106. Sur la base de ces valeurs de données et du paramètre $R_x$, le module fonctionnel 102 génère une ou plusieurs valeurs de sortie D' sur une ligne de sortie 110 en fonction de $D_1$ à $D_N$ et de $R_x$, en d'autres termes $D'=f(D_1...D_N, R_x)$. La ligne de sortie 110 est couplée à un bloc de signature (SIG) 112. Le bloc de signature 112 reçoit aussi les valeurs de données d'origine $D_1$

à $D_N$ sur une ligne 114, et génère une signature $S_D$ sur la base des valeurs de données $D_1$ à $D_N$, et une signature $S_{D'}$ sur la base desdites une ou plusieurs valeurs de données D'. Ces deux signatures $S_D$ et $S_{D'}$ sont comparées par un comparateur (CONT) 120 pour fournir une sortie 122 indiquant si une attaque par injection de fautes est détectée.

Une difficulté provient du fait qu'après l'application d'une fonction par le module fonctionnel 102 aux valeurs de données $D_1$ à $D_N$ sur la base du paramètre de brouillage $R_x$, il est probable que les valeurs de données vont avoir changé dans une mesure telle que la signature $S_{D'}$ n'est plus égale à la signature $S_D$ lorsqu'aucune attaque par injection de fautes n'a eu lieu. En outre, même s'il est possible de choisir soigneusement la fonction f $(D_1...D_N, R_x)$ et la fonction de signature de telle sorte que pour toute valeur de $R_x$ les signatures concordent lorsqu'il n'y a pas de faute, cela limite fortement le choix de ces fonctions. Dans le cas de la fonction f $(D_1...D_N, R_x)$, cette fonction a un but principal de brouiller les valeurs de données $D_1$ à $D_N$. Le fait de limiter le choix pour cette fonction peut donc réduire l'efficacité pour atteindre ce but principal. Dans le cas de la signature, certaines fonctions de signature peuvent être plus efficaces pour la détection d'une faute injectée dans une position de bit quelconque dans l'une quelconque des valeurs d'entrée, et le fait de limiter ainsi le choix des fonctions de signature peut limiter la possibilité de détection de faute.

La figure 2 illustre un circuit 200 de détection de fautes, qui comprend de nombreux éléments identiques à ceux de la figure 1, qui sont notés avec des références numériques identiques et ne vont pas être décrits de nouveau en détail.

Dans le circuit 200, le bloc de signature (SIG) 112 génère la signature $S_{D'}$ sur la base des valeurs D' fournies par le module fonctionnel 102 sur la ligne 110. Un autre bloc de signature (SIG) 202 génère, par exemple pendant une phase d'initialisation, un certain nombre de signatures $S_1$ à $S_L$, dont chacune est basée sur les valeurs de données $D_1$ à $D_N$, après l'application de l'un des paramètres $R_1$ à $R_L$ correspondant. En particulier, le bloc de signature 202 reçoit sur une ligne d'entrée 204 les valeurs de paramètre $R_1$ à $R_L$. C'est le groupe de valeurs de paramètres dans lequel est choisi le paramètre $R_x$ fourni au module fonctionnel 102. Chacune des signatures $S_1$ à $S_L$ est générée en appliquant aux valeurs $D_1$ à $D_N$ lesdites une ou plusieurs opérations, effectuées par le module fonctionnel 102, sur la base du paramètre $R_1$ à $R_L$ correspondant. En particulier, le bloc de signature 202 réalise la même fonction f $(D_1...D_N, R_x)$ que celle réalisée par le module fonctionnel 102, mais avec le paramètre $R_x$ remplacé par chacun des paramètres $R_1$ à $R_L$ tour à tour. Par exemple, en supposant que le module fonctionnel 102 brouille les valeurs de données $D_1$ à $D_N$ en réalisant une fonction Ou-Exclusif (XOR) de chaque valeur avec le paramètre $R_x$, le bloc de signature 202 brouille aussi les valeurs de données $D_1$ à $D_N$ sur la base de chacun des paramètres $R_1$ à $R_L$ tour à tour, et génère les signatures correspondantes $S_1$ à $S_L$ sur la base de chaque groupe de valeurs brouillées.

Le bloc de signature 202 mémorise par exemple les signatures $S_1$ à $S_L$ dans une mémoire 206, qui est par exemple une mémoire ROM (Read Only Memory, mémoire à lecture seule) ou RAM (Random Access Memory, mémoire à accès aléatoire). Une ou plusieurs des signatures $S_1$ à $S_L$ sont fournis en tant que valeur de signature de référence $S_{REF}$ à partir de la mémoire 206 au comparateur 120 pour comparaison avec la signature $S_{D'}$ générée par le bloc de signature 112.

Dans certains modes de réalisation, chacune des signatures $S_1$ à $S_L$ est fournie tour à tour par la mémoire 206 en tant que signature de référence $S_{REF}$ et est comparée par le comparateur 120 à la signature $S_{D'}$. Dans ce cas, on détermine qu'une attaque par injection de fautes a été détecté si aucune de ces signatures $S_1$ à $S_L$ ne concorde avec la signature $S_{D'}$. Cette comparaison systématique de chacune des signatures $S_1$ à $S_L$ est par exemple réalisée si il est peu probable qu'une faute introduite dans une des valeurs de données $D_1$ à $D_N$ puisse entraîner une signature $S_{D'}$ modifiée qui fait aussi partie des signatures $S_1$ à $S_L$. Par exemple, cela sera vrai si les valeurs $R_0$ à $R_L$ ne sont que quelques valeurs prises parmi un ensemble possible R pour un nombre donné de bits de la valeur de brouillage. Cela peut être exprimé par la formule suivante :

$$\text{Cardinal } \{R_1,...,R_L\} << 2^{\text{sizeof}(R_i)}$$

où Cardinal $\{R_1,...,R_L\}$ est le nombre de valeurs dans l'ensemble $R_1$ à $R_L$, égal à L, sizeof($R_i$) est le nombre de bits de chaque valeur $R_i$ de l'ensemble R, et "<<" signifie beaucoup plus grand que, par exemple plus de deux fois plus grand. Par exemple, R est une valeur binaire de 6 bits, ce qui signifie que le nombre de valeurs possibles est $2^6$, soit 64, tandis que les valeurs $R_1$ à $R_L$ pourraient être seulement les valeurs 1, 12, 23, 36, 44 et 59 respectivement. Cela conduit à une probabilité relativement faible qu'une erreur de l'une des valeurs d'entrée brouillées avec la valeur $R_x$ choisie parmi $R_0$ à $R_L$ puisse conduire à une autre signature valide.

A titre de variante, la valeur du paramètre $R_x$ est fourni à la mémoire 206, de sorte qu'une seule signature $S_x$ correspondante des signatures $S_1$ à $S_L$ est sélectionnée dans la mémoire 206 pour comparaison à la signature $S_{D'}$. Ainsi la signature $S_{REF}$ est choisie sur la base de la valeur $R_x$ particulière appliquée par le module fonctionnel lors de la génération des valeurs de sortie D'. Un avantage de cette solution est qu'une seule comparaison est effectuée, ce qui conduit à un résultat plus rapide.

Dans certains modes de réalisation, les valeurs de données $D_1$ à $D_N$ sont connues à l'avance, et le bloc de signature 202 fait partie d'un dispositif d'initialisation qui génère les signatures $S_1$ à $S_L$ pendant une phase d'initialisation, et mémorise ces valeurs dans la mémoire 206, qui est par exemple une ROM ou une RAM. Ces signatures $S_1$ à $S_L$ ne sont plus recalculées pendant toute la durée de vie du dispositif, ou si une mise à jour est nécessaire, de nouvelle valeurs peuvent être chargées dans la mémoire 206. Le bloc de signature 202 n'est donc pas présent dans le dispositif final contenant les autres éléments de la figure 2, et est représenté par des lignes en pointillés en figure 2 pour cette raison.

Dans des variantes de réalisation, les valeurs de données $D_1$ à $D_N$ pourraient être des paquets de données qui sont variables dans le temps, et par conséquent ne peuvent pas être connues à l'avance. Dans ce cas, le bloc de signature 202 peut générer des signatures $S_1$ à $S_L$ "à la volée" pour chaque nouveau groupe de valeurs de données $D_1$ à $D_N$.

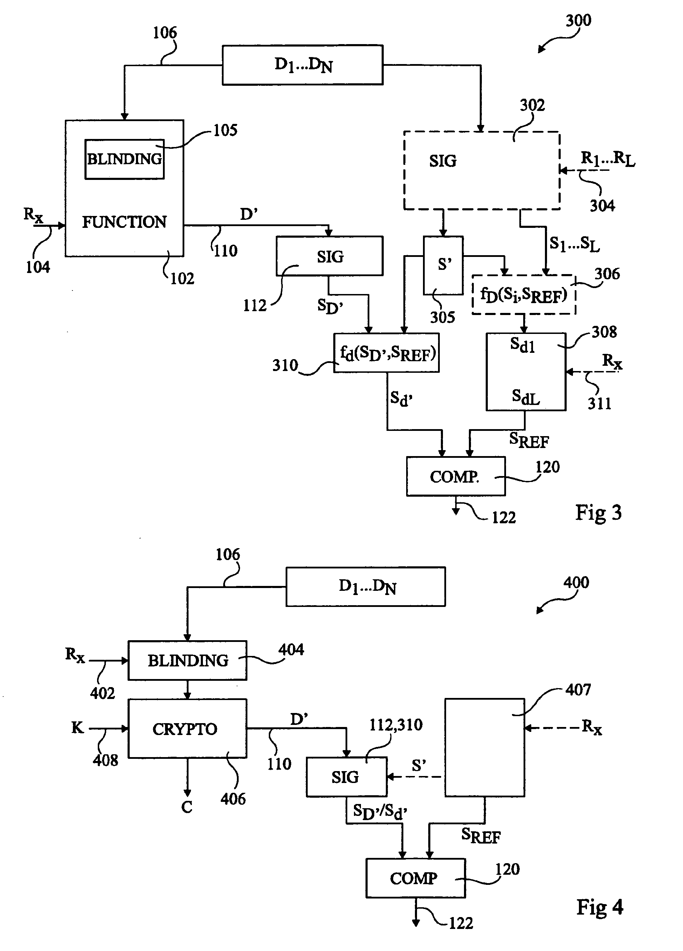

La figure 3 illustre un circuit de détection de fautes 300, dans lequel les éléments 102 à 112 sont les mêmes que ceux de la figure 2 et ne vont pas être décrits en détail de nouveau. Dans ce mode de réalisation de la figure 3, le bloc de signature 202 de la figure 2 est remplacé par un bloc de signature (SIG) 302, qui non seulement produit les valeurs de signature $S_1$ à $S_L$ sur la base des paramètres de brouillage $R_1$ à $R_L$ reçus sur une ligne d'entrée 304, mais génère aussi une valeur de signature de base S'. La valeur de signature de base S' est par exemple la signature générée pour les valeurs de données $D_1$ à $D_N$ sans qu'aucun des paramètres $R_1$ à $R_L$ ne soit appliqué, ou simplement l'une des signatures $S_1$ à $S_L$. La valeur de signature de base S' est mémorisée dans une mémoire 305, qui est par exemple une mémoire ROM ou RAM.

Les signatures $S_1$ à $S_L$ et la valeur de signature de base S' sont fournies à un bloc de différence 306, qui détermine la différence entre la valeur de signature de base S' et chacune des signatures $S_1$ à $S_L$, en appliquant une fonction $f_D(S_i, S')$, où Si est chacune des signatures $S_1$ à $S_L$. Les signatures résultantes $S_{d1}$ à $S_{dL}$ indiquent la différence entre la valeur de signature de base S' et la signature correspondante $S_1$ à $S_L$. Les signatures $S_{d1}$ à $S_{dL}$ sont par exemples inférieures aux signatures correspondantes $S_1$ à $S_L$, et sont par exemples basées sur l'une des fonctions suivantes :

$$S_{di} = S_i - S' \; ;$$

$$S_{di} = S_i / S' \; ;$$

$$S_{di} = S_i \text{ XOR } S', \text{ effectué bit à bit } ;$$

$$S_{di} = \text{Pondération de Hamming}(S_i) - \text{Pondération de Hamming}(S') \; ;$$

ou

$$S_{di} = \text{Pondération de Hamming}(S_i \text{ XOR } S').$$

où pondération de Hamming (X) est le nombre de bits de la valeur X différents de la valeur zéro.

Les signatures $S_{d1}$ à $S_{dL}$ sont mémorisées dans une mémoire 308.

La valeur de signature de base S' est aussi fournie à un bloc de différence 310, qui reçoit la signature $S_{D'}$ provenant du bloc de signature 112, et applique la même fonction $f_D(S_i, S')$ que le bloc 306, mais pour laquelle $S_i$ est remplacé par $S_{D'}$. Cela détermine une valeur de différence $S_{d'}$ fournie au comparateur 120.

Comme la mémoire 206, la mémoire 308 fournit des signatures de référence $S_{REF}$ au comparateur 120, qui dans ce mode de réalisation sont comparées à la signature $S_{d'}$ provenant du bloc de différence de signature 310. Comme avec la mémoire 206, chaque signature provenant de la mémoire 308 pourrait être fournie tour à tour au comparateur 120 pour comparaison avec la valeur $S_{d'}$ ou une valeur particulière $S_{dx}$ pourrait être choisie sur la base de la valeur de $R_x$ fournie à la mémoire 308 sur une ligne d'entrée 311.

Dans les modes de réalisation des figures 2 et 3, la sélection de $R_x$ dans le groupe de paramètres de brouillage $R_1$ à $R_L$ pour le module fonctionnel 102 pourrait être pseudo-aléatoire, ou basée sur un critère, comme par exemple laquelle des clés de chiffrement doit être utilisée pour une opération de chiffrement donnée, en supposant que le

paramètre $R_x$ est une clé. Plus généralement, le paramètre $R_x$ pourrait être une ou plusieurs valeurs appliquées par le module fonctionnel 102 aux valeurs de données $D_1$ à $D_N$, y compris une clé de chiffrement, ou similaire.

Par exemple, le module fonctionnel 102 pourrait réaliser un chiffrement ou un déchiffrement sur la base d'un algorithme tel que l'algorithme AES ou DES, et la fonction f $(D_1...D_N, R_x)$ pourrait par conséquent être la fonction de chiffrement ou de déchiffrement, dans laquelle $D_1$ à $D_N$ sont des paquets de données (texte non chiffré/chiffré) à crypter ou décrypter, et le paramètre de brouillage $R_x$ est la clé de chiffrement/déchiffrement. Les valeurs de données résultantes D' sont ainsi les paquets cryptés ou décryptés (texte chiffré/non chiffré). La mémoire 206, 308 ou 406 mémorise par exemple des signatures de référence générées sur la base de chacune d'une pluralité de clés de chiffrement/déchiffrement $R_1$ à $R_L$ différentes. Ainsi, en plus ou au lieu d'être utilisée pour détecter une attaque par injection de fautes, une comparaison des signatures assure une vérification que la clé $R_x$ utilisée par le module fonctionnel 102 est l'une de la pluralité de clés $R_1$ à $R_L$ de chiffrement ou de déchiffrement valides. Un avantage de cette technique d'authentification est qu'elle peut être réalisée sans connaître la clé effective utilisée pour réaliser une opération donnée de chiffrement ou de déchiffrement. Ainsi le bloc de signature 112, la mémoire 206, 308 ou 406 et le comparateur 120 font par exemple partie d'un dispositif d'authentification, qui est distinct du module fonctionnel 102, et n'a pas accès aux clés de chiffrement/déchiffrement.

A titre de variante, la fonction f $(D_1...D_N, R_x)$ pourrait fournir une série de valeurs brouillées $D_1'$ à $D_N'$, dans laquelle chaque valeur $D_j$, pour j égal 1 à N, est générée comme $D_j' = D_j \text{ XOR } R_x$. Dans un autre exemple, la fonction pourrait être un décalage circulaire vers la gauche ou vers la droite de $D_j$ d'un certain nombres de positions $R_x$, ou $D_j$ mod $R_x$. Les valeurs $D_1$ à $D_N$ pourraient par exemple représenter les valeurs d'une table SBOX utilisée dans un algorithme de chiffrement ou de déchiffrement AES ou DES, ou les métadonnées d'un algorithme SHA-1 ou SHA-2. Un exemple de ce mode de réalisation va maintenant être décrit en référence à la figure 4.

La figure 4 illustre un circuit 400 dans lequel le paramètre de brouillage $R_x$ est reçu sur une ligne d'entrée 402 appliqué à un module de brouillage (BLINDING) 404, qui met en oeuvre la fonction de brouillage avant une fonction cryptographique mise en oeuvre par un bloc cryptographique (CRYPTO) 406. Le bloc 406 reçoit aussi une clé sur une ligne d'entrée 408, et génère une sortie C, qui est par exemple constituée de données cryptées ou décryptées. Dans cet exemple, les sorties présentes sur une ligne 110 sont fournies par le bloc cryptographique 406, et correspondent par exemple aux valeurs brouillées $D_1'$ à $D_N'$ des valeurs de données d'origine $D_1$ à $D_N$. Ces valeurs sont fournies au bloc de signature 112, qui peut ou non inclure la fonctionnalité du bloc de différence de signature 310 de la figure 3. Le résultat est donc soit directement la signature $S_{D'}$, soit une signature $S_{d'}$, indiquant la différence par rapport à une valeur de signature de base S', qui peut être mémorisée dans une mémoire 407. La mémoire 407 mémorise par exemple des signatures $S_1$ à $S_L$ ou $S_{d1}$ à $S_{dL}$, et fournit une ou plusieurs de ces valeurs en tant que $S_{REF}$ au comparateur 120 pour comparaison avec la signature $S_{D'}$ ou $S_{d'}$ afin de détecter une faute.

Dans les modes de réalisation des figures 2, 3 et 4, la fonction de signature appliquée par les blocs de signature 112, 202 et 302, est par exemple une fonction XOR, une opération d'addition ou de multiplication appliquée entre chacune des valeurs de données, une fonction de hachage, des algorithmes SHA-1 ou SHA-2, un algorithme MD5, un algorithme CRC (code à redondance cyclique), ou tout autre type de fonction de signature dont le résultat peut permettre de détecter une faute dans l'un des ensembles sous-jacents de valeurs de données.

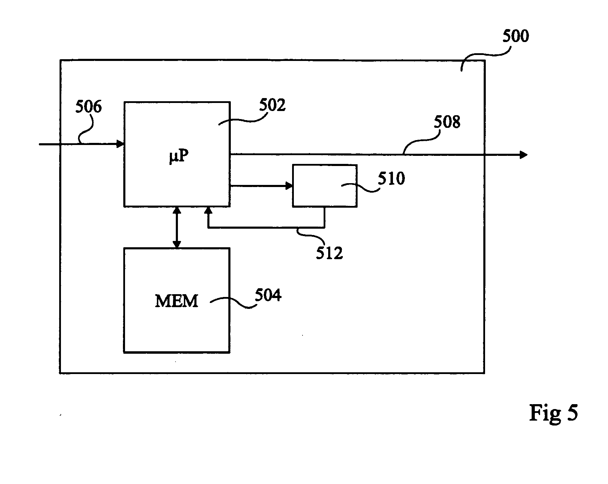

La figure 5 illustre un dispositif électronique 500 comprenant un microprocesseur 502, un bloc de mémoire 504 et une ligne d'entrée 506, qui fournit des valeurs d'entrée au microprocesseur 502. Le microprocesseur 502 fournit des valeurs de sortie sur une ligne de sortie 508. En outre, un circuit de protection 510 comprend le bloc de signature 112, la mémoire 206, 308 ou 407, et le comparateur 120 et dans certains modes de réalisation la mémoire 305 et le bloc de différence de signature 310, comme cela a été décrit précédemment. Ce circuit 510 fournit un signal d'alarme sur une ligne de sortie 512 renvoyée au microprocesseur 502, qui déclenche par exemple une remise à zéro du microprocesseur 502 et/ou incrémente un compteur (non représenté en figure 5), ce qui va désactiver de façon permanente le microprocesseur une fois qu'une certaine valeur de comptage a été atteinte.

Le dispositif électronique 500 est par exemple une carte à circuit intégré, comme par exemple une carte à puce, un lecteur de cartes à puce, comme un terminal de paiement par carte de crédit, ou un boîtier décodeur, un disque dur pour un ordinateur personnel ou un ordinateur portable, un ordinateur personnel ou un ordinateur portable, une machine de vente ou un autre dispositif manipulant des informations sensibles.

Un avantage du mode de réalisation décrit ici est que la vérification de signature est possible même lorsqu'une fonction est appliquée aux valeurs de données d'origine sur la base d'un ou plusieurs paramètres. Un autre avantage des modes de réalisation décrits ici est que la fonction de signature n'est pas limitée à une fonction particulière.

Un avantage du fait de mémoriser des valeurs de différence $S_{d1}$ à $S_{dL}$ en tant que signatures est que ces valeurs peuvent occuper moins de place que les signatures complètes, et utiliser relativement moins de ressources de traitement pour leur génération.

Après la description d'au moins un mode de réalisation illustratif de l'invention, diverses altérations, modifications et améliorations apparaîtront facilement à l'homme de l'art.

Par exemple, l'homme de l'art remarquera que les modes de réalisation décrits ici peuvent être appliqués à une large gamme de circuits dans lesquels une vérification de signature est utilisée pour la détection d'injection de fautes.

En outre, l'homme de l'art remarquera que les modes de réalisation décrits ici peuvent être mis en oeuvre sous forme de logiciel, de matériel ou d'une combinaison des deux. En outre, les fonctionnalités décrites en relation avec les divers modes de réalisation pourraient être combinées de façon quelconque dans des variantes de réalisation.

## Revendications

1. Procédé de détection de faute, comprenant les étapes suivantes :

   générer au moins une valeur de données (D') brouillée sur la base d'au moins une valeur d'entrée ($D_1...D_N$) et d'au moins un paramètre de brouillage ($R_X$) choisi parmi une pluralité de paramètres de brouillage ($R_1$ à $R_L$) ;
   générer une première signature ($S_{D'}$, $S_{d'}$) sur la base de ladite au moins une valeur de données brouillée ;
   sélectionner, dans une mémoire (308) mémorisant une pluralité de signatures de référence ($S_1$ à $S_L$, $S_{d1}$ à $S_{dL}$), chacune de la pluralité de signatures de référence ($S_{REF}$) tour à tour ; et
   comparer la première signature à chacune de la pluralité de signatures de référence, une faute étant détectée si aucune des signatures de référence ne concorde avec la première signature.

2. Procédé selon la revendication 1, comprenant en outre, avant l'étape de sélection d'une ou plusieurs signatures de référence dans la mémoire, la génération de la pluralité de signatures de référence sur la base de la pluralité de paramètres de brouillage, et la mémorisation des valeurs dans la mémoire.

3. Procédé selon la revendication 1 ou 2, dans lequel l'étape de sélection d'une ou plusieurs signatures de référence dans la mémoire comprend la sélection d'une signature de référence sur la base dudit au moins un paramètre sélectionné.

4. Procédé selon l'une quelconque des revendications 1 à 3, dans lequel la première signature et la pluralité de signatures de référence sont des valeurs indiquant une différence par rapport à une valeur de signature de base (S') générée sur la base de ladite au moins une valeur de données d'entrée.

5. Procédé selon l'une quelconque des revendications 1 à 4, dans lequel les paramètres de brouillage sont des clés de chiffrement et ladite au moins une valeur de données brouillée est une valeur de données cryptée ou décryptée générée sur la base de la valeur de paramètre sélectionnée.

6. Procédé selon l'une quelconque des revendications 1 à 5, dans lequel il y a une pluralité de valeurs de données brouillées, et la première signature est générée par l'application d'une des fonctions suivantes entre chacune des valeurs de données brouillées :

   une fonction de hachage ;
   une fonction XOR ;
   une multiplication ; et
   une addition.

7. Procédé de détection d'une attaque par injection de fautes comprenant le procédé de détection de fautes selon l'une quelconque des revendications 1 à 6, dans lequel une attaque par injection de fautes est détectée si une différence est détectée entre la première signature et chacune desdites une ou plusieurs signatures de référence.

8. Procédé de vérification de l'authenticité de données cryptées ou décryptées, comprenant le procédé de détection de fautes selon l'une quelconque des revendications 1 à 6, dans lequel la pluralité de paramètres est constituée de clés de chiffrement, et dans lequel les données cryptées ou décryptées sont déterminées comme n'étant pas authentiques si une différence est détectée entre la première signature et chacune desdites une ou plusieurs signatures de référence.

9. Circuit de détection de faute, comprenant :

   un module fonctionnel (102) agencé pour générer au moins une valeur de données brouillée (D') sur la base d'au moins une valeur d'entrée ($D_1...D_N$) et d'au moins un paramètre de brouillage ($R_X$) sélectionné parmi une pluralité de paramètres de brouillage ($R_1$ à $R_L$) ;

un bloc de signature (112, 310) agencé pour générer une première signature ($S_{D'}$, $S_{d'}$) sur la base de ladite au moins une valeur de données ;

une mémoire (308) mémorisant une pluralité de signatures de référence ($S_1$ à $S_L$, $S_{d1}$ à $S_{dL}$) ;

des moyens de sélection de chacune de la pluralité de signatures de référence ($S_{REF}$) tour à tour ; et

un comparateur (120) agencé pour comparer la première signature à chacune de la pluralité de signatures de référence, une faute étant détectée si aucune des signatures de référence ne concorde avec la première signature.

10. Circuit intégré comprenant le circuit de la revendication 9.

11. Dispositif électronique comprenant le circuit intégré de la revendication 10.

12. Carte à puce comprenant le circuit intégré de la revendication 10.

13. Lecteur de cartes à puce comprenant le circuit intégré de la revendication 10.


**Claims**

1. A method of detecting a fault comprising:

   generating at least one data value (D') scrambled based on at least one input value ($D_1...D_N$) and at least one scrambling parameter ($R_X$) selected from a plurality of scrambling parameters ($R_1$ to $R_L$);

   generating a first signature ($S_{D'}$, $S_{d'}$) based on said at least one scrambled data value;

   selecting, from a memory (308) storing a plurality of reference signatures ($S_1$ to $S_L$, $S_{d1}$ to $S_{dL}$), each of said plurality of reference signatures ($S_{REF}$) in turn; and

   comparing said first signature with each of said plurality of reference signatures, a fault being detected if none of said reference signatures matches said first signature.

2. The method of claim 1, further comprising, prior to the step of selecting one or more reference signatures from said memory, generating said plurality of reference signatures based on said plurality of scrambling parameters, and storing said values in said memory.

3. The method of claim 1 or 2, wherein said step of selecting one or more reference signatures from said memory comprises selecting a reference signature based on the selected at least one parameter.

4. The method of any of claims 1 to 3, wherein said first signature and said plurality of reference signatures are values indicating a difference with respect to a base signature value (S') generated based on said at least one input data value.

5. The method of any of claims 1 to 4, wherein said scrambling parameters are encryption keys and said at least one scrambled data values are encrypted or decrypted data values generated based on said selected parameter value.

6. The method of any of claims 1 to 5, wherein there are a plurality of said scrambled data values, and said first signature is generated by applying one of the following functions between each of said scrambled data values:

   a hash function;
   an XOR function;
   a multiplication; and
   an addition.

7. A method of detecting a fault attack comprising the method of detecting a fault of any of claims 1 to 6, wherein a fault attack is detected if a difference is detected between the first signature and each of the one or more reference signatures.

8. A method of verifying authenticity of encrypted or decrypted data comprising the method of detecting a fault of any of claims 1 to 6, wherein the plurality of parameters are encryption keys, and wherein the encrypted or decrypted data is determined not to be authentic if a difference is detected between the first signature and each of the one or more reference signatures.

9. Circuitry for detecting a fault comprising:

a function unit (102) arranged to generate at least one scrambled data value (D') based on at least one input value ($D_1...D_N$) and at least one parameter ($R_X$) selected from a plurality of scrambling parameters ($R_1$ to $R_L$);
a signature block (112, 310) arranged to generate a first signature ($S_{D'}$, $S_d'$) based on said at least one data value;
a memory (308) storing a plurality of reference signatures ($S_1$ to $S_L$, $S_{d1}$ to $S_{dL}$);
means for selecting each of said plurality of reference signatures ($S_{REF}$) in turn; and
a comparator (120) arranged to compare said first signature with plurality of each of said plurality of reference signatures, a fault being detected if none of said reference signatures matches said first signature.

10. An integrated circuit comprising the circuitry of claim 9.

11. An electronic device comprising the integrated circuit of claim 10.

12. An IC (integrated circuit) card comprising the integrated circuit of claim 10.

13. An IC (integrated circuit) card reader comprising the integrated circuit of claim 10.

**Patentansprüche**

1. Ein Verfahren zum Detektieren eines Fehlers, wobei Folgendes vorgesehen ist:

Erzeugen von mindestens einem Datenwert (D') verschlüsselt oder scrambled basierend auf mindestens einem Eingangswert ($D_1...D_N$) und mindestens einem Scrambling- oder Verschlüsselungsparameter ($R_X$) ausgewählt aus einer Vielzahl von Scrambling-Parametern ($R_1$ bis $R_L$);
Erzeugen einer ersten Signatur ($S_{D'}$, $S_d'$) basierend auf den mindestens einen verschlüsselten oder gescrambelten Datenwert;
Auswahl aus einem Speicher (308), der eine Vielzahl von Bezugssignaturen ($S_1$ bis $S_L$, $S_{d1}$ bis $S_{DL}$) speichert, jede der erwähnten Vielzahl von Bezugssignaturen ($S_{REF}$) der Reihe nach; und
Vergleichen der erwähnten ersten Signatur mit jeder der erwähnten Vielzahl von Bezugssignaturen, wobei ein Fehler detektiert wird, wenn keine der erwähnten Referenzsignaturen der erwähnten ersten Signatur entspricht.

2. Verfahren nach Anspruch 1, wobei ferner vorgesehen ist, dass vor dem Schritt der Auswahl von einer oder mehreren Bezugssignaturen aus dem Speicher eine Vielzahl von Bezugssignaturen erzeugt wird, und zwar basierend auf der erwähnten Vielzahl von Scrambling-Parametern, und Speichern der erwähnten Werte in dem Speicher.

3. Verfahren nach Anspruch 1 oder 2, wobei der Schritt des Auswählens eine oder mehrere Bezugssignaturen aus dem erwähnten Speicher die Auswahl einer Bezugssignatur umfasst, basierend auf dem ausgewählten mindestens einen Parameter.

4. Verfahren nach einem der Ansprüche 1 bis 3, wobei die erste Signatur und die erwähnte Vielzahl von Bezugs- bzw. Referenzsignaturen Werte sind, die eine Differenz anzeigen bezüglich eines Basissignaturwertes (S') erzeugt, basierend auf dem erwähnten mindestens einen Eingangsdatenwert.

5. Verfahren nach einem der Ansprüche 1 bis 4, wobei die erwähnten Scrambling-Parameter Verschlüsselungs- oder Encrpytion-Schlüssel sind, und wobei der mindestens eine Wert, der verschlüsselten Datenwerte ein Wert ist, der verschlüsselten oder entschlüsselten Datenwerte ist, und zwar erzeugt auf der Basis des Wertes des ausgewählten Parameters.

6. Verfahren nach einem der Ansprüche 1 bis 5, wobei eine Vielzahl der erwähnten gescrambelten oder verschlüsselten Datenwerte und die erste Signatur erzeugt ist durch Anlegen von einer der folgenden Funktionen, zwischen jedem der erwähnten gescrambelten Datenwerte:

eine Hash-Funktion;
eine XOR-Funktion;

eine Multiplikation; und
eine Addition.

7. Verfahren zum Detektieren einer Fehlerattacke wobei das Verfahren zum Detektieren eines Fehlers nach einem der Ansprüche 1 bis 6 vorgesehen ist, wobei eine Fehlerattacke detektiert wird, wenn eine Differenz zwischen der ersten Signatur und jeder der einen oder der mehreren Referenzsignaturen detektiert wird.

8. Verfahren zur Verifizierung der Authentizität von verschlüsselten oder entschlüsselten Daten, wobei das Verfahren das Verfahren des Detektierens eines Fehlers nach irgendeinem der Ansprüche 1 bis 6 aufweist, wobei die Vielzahl der Parameter Verschlüsselungsschlüssel sind, und wobei die verschlüsselten oder entschlüsselten Daten festgestellt werden als nicht authentisch, wenn eine Differenz detektiert wird zwischen der ersten Signatur und jeder der einen oder mehreren Referenzsignaturen.

9. Schaltung zum Detektieren eines Fehlers, wobei Folgendes vorgesehen ist:

eine Funktionseinheit (102) angeordnet zur Erzeugung von mindestens einem verschlüsselten Datenwert (D') basierend auf mindestens einem Eingangswert ($D_1...D_N$) und mindestens einem Parameter ($R_X$) ausgewählt aus einer Vielzahl von Verschlüsselungs- bzw. Scrambling-Parametern ($R_1$ bis $R_L$);
ein Signaturblock (112, 310) angeordnet zur Erzeugung einer ersten Signatur ($S_{D'}$, $S_{d'}$) basierend auf den mindestens einen Datenwert;
einen Speicher (308) oder Speicherung einer Vielzahl von Bezugssignaturen ($S_1$ bis $S_L$, $S_{d1}$ bis $S_{dL}$);
Mittel zur Auswahl jeder der erwähnten Vielzahl von Bezugssignaturen ($S_{REF}$) der Reihe nach; und
ein Komparator oder eine Vergleichsschaltung (120) angeordnet zum Vergleichen der ersten Signatur mit der Vielzahl von jeder der erwähnten Vielzahl von Bezugssignaturen, wobei ein Fehler detektiert wird, wenn keine der Bezugs- oder Referenzsignaturen der ersten Signatur entspricht.

10. Integrierte Schaltung, die die Schaltung des Anspruchs 9 aufweist.

11. Eine elektronische Vorrichtung, die eine integrierte Schaltung nach Anspruch 10 aufweist.

12. Eine IC (integrierte Schaltung) Karte, die die integrierte Schaltung nach Anspruch 10 aufweist.

13. Ein IC (integrierte Schaltung) Kartenleser, der die integrierte Schaltung nach Anspruch 10 aufweist.

Fig 1

Fig 2

Fig 3

Fig 4

Fig 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• FR 2841015